# EUROPEAN PATENT SPECIFICATION

(11) **EP 0 525 211 B1**
(45) Date of publication and mention of the grant of the patent: **09.06.1999**
(21) Application number: 92905300.7
(22) Date of filing: 19.02.1992
(51) Int. Cl.: C09K 11/00, C09K 11/02, C09K 11/08, C09D 5/22

(54) **LUMINOUS MEMBER**
LICHTELEMENT
ELEMENT LUMINEUX

(30) Priority: 19.02.1991 JP 4532391; 19.02.1991 JP 1349991 U; 05.03.1991 JP 1869191 U; 29.07.1991 JP 6655791 U
(43) Date of publication of application: 03.02.1993
(73) Proprietor: MORIYAMA, Hirofumi, Tokyo 152 (JP); MORIYAMA, Tomofumi, Tokyo 152 (JP); KANAI, Kiyoshi, Tokyo 152 (JP)
(72) Inventor: MORIYAMA, Hirofumi, Tokyo 152 (JP); MORIYAMA, Tomofumi, Tokyo 152 (JP); KANAI, Kiyoshi, Tokyo 152 (JP)
(74) Representative: Schrimpf, Robert
(86) International application number: JP9200172
(87) International publication number: WO9214799

(56) References cited:
- WO-A-91/12292
- DE-A- 3 910 053
- FR-A- 2 168 685
- JP-A- 1 022 987
- JP-A- 55 110 177
- JP-A- 57 014 658
- JP-A- 58 173 182
- JP-A- 60 131 847
- JP-A- 60 226 959
- JP-A- 61 026 634
- JP-B- 47 014 702
- JP-B- 49 029 928
- JP-U- 53 051 443
- US-A- 3 908 055
- US-A- 4 208 300

## Description

### TECHNICAL FIELD

This invention relates to a luminous member capable of emitting a luminescence on irradiation of ultraviolet rays and, more particularly, to a luminous member which excels in heat-resistibility and weatherability and can be applied to building members used, for example, as interiors and exteriors or rooves of buildings and also used in various types of refractories.

### TECHNICAL BACKGROUND

Hitherto, organic fluorescent pigments have been predominantly used to impart bright colorations to synthetic resins such as polyethylene, soft polyvinyl chloride and the like. The organic fluorescent pigments used in this field may be called daylight fluorescent pigments. Such pigments are excited on irradiation with light in a region of short wavelengths of from UV to visible light, most of which is in a wavelength region of daylight, thereby emitting a fluorescence and assuming a bright color. Typical organic fluorescent substances (fluorescent dyes) known in the art include Brilliant Sulfoflavin FF (yellow), Basic Yellow HG (yellow), Eosine (red), Rhodamine 6G (red), Rhodamine B (red) and the like.

The synthetic resins colored with these organic fluorescent materials have been applied not only to toys and leisure articles, but also for decoration of shops or stores. The above-indicated organic fluorescent materials have also been used as a fluorescent paint. The film formed from the fluorescent paint has a brilliance in a daylight condition not less than three times the brilliance of the case using ordinary paints. Moreover, when UV rays are irradiated on a fluorescent paint film in the dark, the film is seen as lit like neon lamps. The fluorescent paint which ensures such high visibility has now been employed in the fields of advertisement and decoration, particularly for signboards, posters, markings and the like.

In recent years, synthetic resins have been drastically improved in heat resistance, flame retardancy, weatherability and processability. The synthetic resin sheets have thus been used as an outer wall material and rooves of buildings. Especially, attention has ben paid to fluorine resins as a semi-permanently usable building material. This is because that the fluorine resin sheets have characteristics of good heat resistance and weatherability and also have such very high non-stickiness that dust or dirt is unlikely to be deposited thereon. Importance has been hitherto placed on physical properties of these resins but little studies has been made on the appearance of the resin. For instance, when used as outer walls or rooves of buildings, there is a demand of resins which have not only their inherent color, but also a brightly tinted color.

From the standpoint of fire proofing, refractories such as glass, ceramics and the like have been frequently employed as interior or exterior members of buildings. For conspicuous portions of buildings, there is a demand of decorating them with a glittering color, if desired. Besides, glass materials have been often used as a lighting fixture or decorative article. There is also a demand of causing the glass itself to emit light.

However, organic fluorescent materials which have been used for coloration of synthetic resins or as a fluorescent paint have a heat resistance corresponding to a temperature as low as 200 to 300°C . Accordingly, they cannot be used not only for coloration of moldings of high heat-resistant resins such as fluorine resins whose melting point is approximately 300 to 400°C , but also for coloration of moldings of glass and ceramics or baking on the surfaces of refractories (glass, ceramics, metals and the like) at high temperatures. For instance, tile pieces which are frequently employed as outer walls, rooves, inner walls and floors at the inside and outside of buildings are fabricated as follows. Minerals such as clays, rocks and the like are formulated and divided into pieces, followed by molding in a desired shape to obtain a green molding. If necessary, a vitreous glaze is applied, and the resulting molding is sintered at high temperatures of not lower than several hundreds centigrade. This is used as a surface covering member which protects a base being covered therewith and gives a good appearance. From the standpoint of the appearance, the pieces are, in most cases, colored. At the sintering temperature for the tile pieces, the luminous characteristic of the organic fluorescent material is completely lost. Accordingly, such coloration has been heretofore made using pigments such as cobalt oxide (blue color), tin oxide (white color) and the like .

DE 3 910 053 describes a cable with a fluorescent coating. FR 2 168 685 discloses a material for construction which is fluoresent.

### DISCLOSURE OF THE INVENTION

The present invention has been made under these circumstances in the art and has for its object the provision of luminous member which excels in heat-resistability and weatherability and is able to emit a clear fluorescence.

The luminous member according to the invention is recited in claim 1. The luminous member of the invention is not critical with respect to the shape and may be in the form of sheets or three-dimensional configurations. If the luminous member is in the form of a sheet, it may include ones which have a thin film luminous portion and a luminous portion consisting of fabrics (including non-woven fabrics) of synthetic resin fibers or glass fibers in which inorganic fluorescent materials are formulated. The matrix used in the present invention is not critical provided that it is moldable. Synthetic resins or inorganic materials may be used, for example. The inorganic materials used herein include so-called glass (amorphous solid solution) and various types of ceramics other than glass. If synthetic resins are used as the matrix, the types of resins are not limited and should be properly selected depending on the purpose in end use of the luminous member. For instance, there may be used thermoplastic resins such as fluorine resins, polyamide resins, polyimide resins, polyethylene resins, vinyl chloride resins and the like and thermosetting resins such as epoxy resins, polyurethane resins and the like. In view of the durability, it is preferred to select resins which have a good heat resistance and suffers a reduced degree of degradation on exposure to UV ray.

The inorganic fluorescent materials used in the present invention are ones which are mainly used in lamps. The material is applied onto the inner surface of a glass tube for the lamp and is excited with UV rays generated within the glass tube thereby emitting a fluorescence with a given color. In general, on emission of fluorescence, inorganic fluorescent materials require a UV irradiation with a high energy intensity than organic fluorescent materials. In addition, the inorganic materials are unlikely to emit a clear fluorescence under daylight as is different from organic fluorescent materials. This is why use of inorganic fluorescent materials for coloration of resins have never been taken into account in the art. Under these circumstances, the present inventors have paid their attention to the fact that in view of the necessity of a higher energy for excitation of inorganic fluorescent materials than for excitation of organic fluorescent materials, the inorganic fluorescent materials are more stable to light and that inorganic fluorescent materials have a better heat resistance in view of the nature of the inorganic matter. The present invention is accomplished based on the above finding.

The inorganic fluorescent materials used in the present invention are so weak in luminous intensity under ordinary daylight or under indoor illumination that a formulated portion assumes only a slight degree of coloration. When, however, UV ray from an appropriate light source is irradiated thereon, clear light is emitted. As stated hereinabove, the inorganic fluorescent materials excel in heat-resistibility without impeding the luminous properties at about molding temperatures of high heat-resistant resins and can thus be satisfactorily applied for coloration of glass or ceramics. Further, the inorganic fluorescent materials are significantly higher in light fastness than organic fluorescent materials, ensuring good luminous properties over a long term if luminous member according to the invention are kept for outdoor service.

The inorganic fluorescent materials used in the present invention are not critical and comprise a material selected from the group consisting of, for example,

| | |
|---|---|
| 3Ca₃ (PO₄ )₂·Ca(F,Cl )₂:Sb³⁺ ; | 3Ca₃ (PO₄ )₂·Ca(F,Cl )₂ :Sb³⁺ ,Mn²⁺ ; |
| BaMg₂Al₁₆O₂₇ :Eu²⁺ ; | (Sr,Ca)₁₀(PO₄ )₆Cl₂ :Eu²⁺ ; |
| Sr₄Al₁₄O₂₅ :Eu²⁺ ; | BaMg₂Al₁₆O₂₇ :Eu²⁺ ,Mn²⁺ ; |
| CaWO₄ ; | CaWO₄ :Pb²⁺ ; |
| Sr₂P₂O₇ :Sn²⁺ ; | Y₂O₃ :Eu³⁺ ; |
| 3.5MgO·0.5MgF₂GeO₂ :Mn⁴⁺ ; | Y(PV)O₄ :Eu³⁺ ; |
| (Sr,Mg)₃ (PO₄ )₂ :Sn²⁺ ; | 6MgO·As₂O₅ :Mn⁴⁺ ; |
| (Ca,Sr)SiO₃ :Pb²⁺ ,Mn²⁺ ; | CeMgAl₁₁O₁₉ :Tb³⁺ ; |
| LaPO₄ :Ce³⁺ ,Tb³⁺ ; | Zn₂SiO₄ :Mn²⁺ ; |
| Sr₂P₂O₇ :Eu²⁺ ; | (Ba,Sr,Mg)₃Si₂O₇ :Pb²⁺ ; and |
| BaSi₂O₅ :Pb²⁺. | |

Of these fluorescent materials, aluminate fluorescent materials such as BaMg₂Al₁₆O₂₇:Eu²⁺, Sr₄Al₁₄O₂₅ :Eu²⁺, BaMg₂Al₁₆O₂₇ :Eu²⁺,Mn²⁺, CeMgAl₁₁O₁₉ :Tb³⁺ and the like have been employed in three wavelength-type fluorescent lamps or fluorescent lamps for duplicators, from which there are respectively obtained stable blue, bluish green, green and yellowish green radiations in high efficiencies.

It is not necessary that the intensity of UV ray to be irradiated on the luminous member of the invention is set at such a high level as for lamps, but may be minimized to obtain a desired level luminescence. The excitation wavelength is not necessarily set so that the luminous intensity becomes maximized but it is preferred to use longer wavelength UV ray which is innoxious of human body, or so-called black light (352 nm).

As stated above, the invention enables one to have hitherto impossible glittering colors assumed in the fields of members including building members where higher degrees of heat-resistibility and weatherability are required. Thus, the invention is of a very high industrial value.

### BRIEF DESCRIPTION OF THE DRAWINGS

Figs. 1a, 1b, 1c and 1d show, respectively, perspective views of luminous sheet members according to embodiments of the invention;
Fig. 2 shoes a sectional view of a luminous sheet member according to an embodiment of the invention;
Figs. 3, 4 are, respectively, perspective views showing applications of luminous sheet members according to the embodiments of the invention;
Figs. 5 and 6 are, respectively, schematic views showing fabrication process of luminous sheet members according to the embodiments of the invention;
Fig 7 is a perspective view showing applications of a fluorescent member according to the embodiments of the invention;
Figs. 8a, 8b and 8c show, respectively, perspective views of luminous tile pieces according to the embodiments of the invention; and
Figs. 9, 10 and 11 are, respectively, illustrative views showing applications of the tile pieces according to the embodiments of the invention.

### BEST MODE FOR CARRYING OUT THE INVENTION

Embodiments of the invention will be described hereafter in which the fabrication methods and applications of the luminous members in the respective embodiments are described only for illustration and which should not be construed as limiting the invention to these fabrication methods and applications of the luminous member.

Firstly, in following Examples 1 to 4 according to the present invention, luminous member in the form of a sheet (hereinafter referred to as sheet member) are illustrated.

### =Example 1=

Fig. la shows an embodiment of a sheet member composed of a luminescent layer (luminescent portion) la alone. The fabrication process of the sheet member is not critical. When a fluorine resin (e.g. polytetrafluoroethylene) is used as a synthetic resin to form a relatively thick luminescent layer 1a, it can be fabricated by compression molding, extrusion molding or the like.

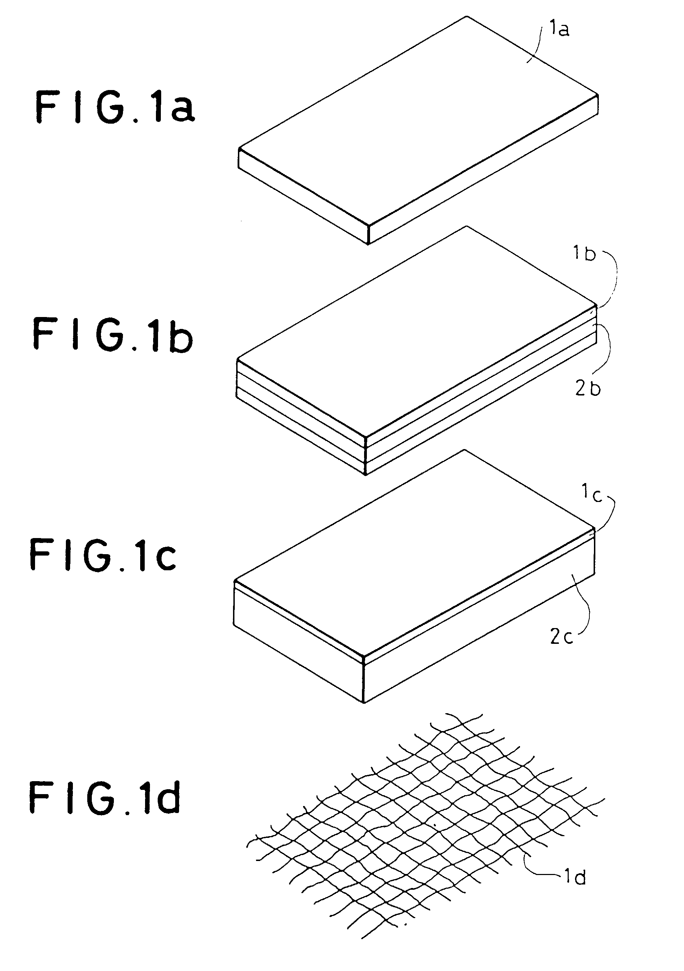

For instance, a fluorine resin starting powder in which powder of an inorganic fluorescent material is formulated is uniformly placed in a mold which is so shaped as to provide a sheet member with an intended thickness, followed by press molding at normal temperatures. The resultant green molding is placed in a furnace and sintered at a temperature range from 360°C to 380 °C to obtain a luminous sheet member as shown in Fig. 1a.

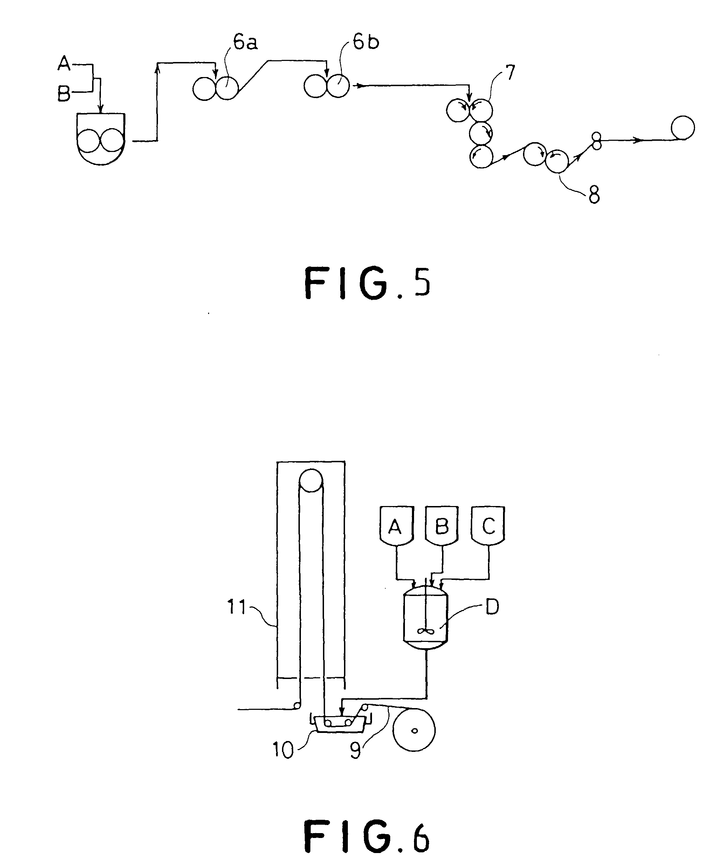

In order to continuously obtain a sheet member made of a single thin luminescent layer at higher rate, it can be made using a calender molding procedure as shown in Fig. 5. More particularly, an inorganic fluorescent powder B is added to a desired type of thermoplastic resin A and mixed under melting conditions, followed by passing through kneading rolls 6a and 6b. The melting temperature should be set depending on the type of resin used. The luminescent characteristics of the inorganic fluorescent material are not impeded at all by heating to the melting temperature of the resin. The melt taken out from the kneading roll 6b is pressed through heated calender rolls and cooled (cooling rolls 8) to continuously obtain a luminous sheet with a uniform thickness.

To obtain a thin film luminous sheet member, a powder of an inorganic fluorescent material is added to and mixed with a resin melt on film formation such as by a known melt extrusion.

### =Example 2=

The sheet member of Fig. lb includes a reinforcing layer 2b made of glass fibers provided within a luminescent layer 1b which is formed by a synthetic resin substrate formulated with an inorganic fluorescent material. Using a fluorine resin for example, the luminous sheet member as shown in Fig. 1b may be formed according to a dipping process as shown in Fig 6. More particularly, an aqueous colloidal suspension D which contains a fluorine resin starting powder A, an inorganic fluorescent powder B and a surface active agent C is first prepared. A glass fiber cloth 9 is immersed in and then removed from the aqueous colloidal suspension D, followed by baking at a temperature range from 360°C to 380 °C by the use of a far-infrared furnace 11 or the like to obtain a luminous sheet member reinforced with the glass fiber cloth as shown in Fig. lb. In order to make a thick luminescent layer 1b, the immersion and baking steps should be repeated. Alternatively, a desired number of the layers 1b may be stacked up and hot pressed.

### =Example 3=

Fig. lc shows another embodiment of a sheet member wherein a thin luminescent glass layer 1c containing an inorganic fluorescent material is formed on a surface of a glass substrate as a reinforcing layer 2c. The luminescent layer lc may be formed, for example, by the following solation-gelation method.

That is, an organometallic compound such as a metal alkoxide is hydrolyzed in an appropriate solvent to effect a condensation reaction. The resultant sol is applied onto the surface of a glass sheet within a time at which the sol does not lose its fluidity, dried and sintered to obtain a luminous sheetmember of Fig. 1c.

The sintering process in the solation-gelation method is performed at a temperature in the vicinity of a transition point of the intended glass (a temperature of 1/2 - 1/3 of the melting temperature). Since the glass can be shaped at a temperature lower than 1000 °C thus the luminescent layer made of the glass can be formed without impeding the luminescent characteristics of the inorganic fluorescent material.

It will be noted that with the arrangement of Fig. 1c, although the luminescent layer 1c is formeed on the surface of the ordinary glass substrate fabricated by the melting method, the sheet member may be entirely made of the luminescent layer which consists of the glass formed according to the solation-gelation method.

Needless to say, if intended luminescent characteristics are insured, the luminescent layer may be formed by the melting method wherein an inorganic fluorescent material is added upon melting of glass. In the practice of the invention, inorganic fluorescent materials are not used for lamps but the luminescent layer is sufficient to be visibly observed as colored, so that it is not necessary to exactly control the luminous intensity and color tone. This is why any trouble is not involved in utilizing the sheet member wherein the luminescent layer is formed by the melting method.

### =Example 4=

Fig. 1d shows another embodiment of a sheet member which has a luminescent layer 1d constituted of fibers obtained by spinning of a synthetic resin formulated with an inorganic fluorescent material.

For instance, when a polyamide resin is used as the resin and spun according to a known melt spinning method (a melt is extruded from an orifice and cooled to solidify), an inorganic fluorescent material is formulated in the melt thereby readily obtaining luminescent polyamide fibers.

If a fluorine resin is used as the resin, the melt viscosity is very high, so that an emulsion spinning method or the like may be adopted. More particularly, an inorganic fluorescent material and a sizing agent are added to and mixed with an aqueous suspension of a fluorine resin, then the mixture is extruded from an orifice into a solidifying medium according to a wet spinning procedure, followed by heat process at about 320 °C to 400 °C to remove the sizing agent and to a melt-bond of the fluorine resin particles, thereby obtaining luminescent fluorine resin fibers.

Further, in the case of the solation-gelation method is applied as previously descrimed in the embodiment of Fig. 1c, the luminescent layer constituted of glass fibers can be obtained if the sol formulated with the inorganic fluorescent material is spun and sintered within a time at which the sol does not lose its fluidity.

Although, in the embodiment of Fig. 1d, fibers are woven, it is possible to obtain a non-woven fabric using the fibers formulated with the inorganic fluorescent material. In this case, an inorganic fluorescent material is added to a starting resin and melt-kneaded, followed by spinning of the melt and randomly piling up the resultant fibers to make a sheet. Thereafter, the sheet is hot pressed by passing through embossing rolls to obtain a sheet member made of a luminescent non-woven fabric.

Applications of these luminous sheet members fabricated in Examples 1 to 4 will be particularly described as follows. Needless to say, the applications described below should not be construed as limiting the manner of application of the sheet members of Figs. 1a to 1d.

The sheet member of Fig. la may be utilized not only as rooves or outer walls (described later) of buildings and sheet plates for advertisement, but also substitutes for wall paper or shoji paper. When UV ray is irradiated, a clear color may be emitted. Since the sheet member has a very high light fastness, its luminescent characteristics suffer little reduction when the sheet is placed in the vicinity of windows where it is long exposed to sunlight. When, for example, a fluorine resin is used as the synthetic resin, dust or dirt is very unlikely to deposit thereon, thus, the sheet is prevented from blackening or yellowing like ordinary curtains or blinds. In the aforestated fabrication method of the sheet member, the luminescent layer is entirely, uniformly formulated with an inorganic fluorescent material. If the sheet member according to the invention is employed as a plate for advertisement or a wall paper, the inorganic fluorescent material is so formulated as to correspond to intended patterns or figures in the luminescent layer la. If plural types of inorganic fluorescent materials which emit different luminous colors are properly used, an intricate patterns or figures can be shown in clear colors on UV irradiation.

A luminous sheet member may be fabricated in the form of a substantially transparent film using a relatively small amount of an inorganic fluorescent material.

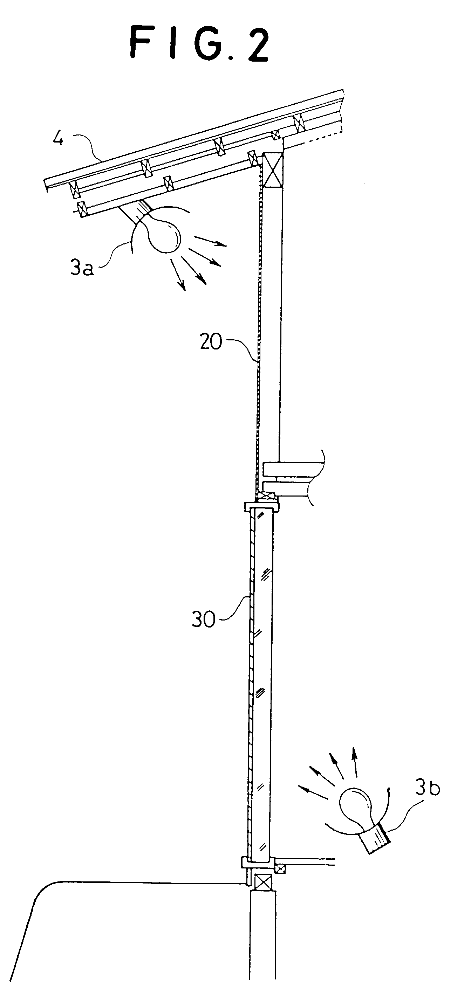

The sheet member of Fig. lb reinforced with glass fibers may be used as outer walls of a building 4 as shown, for example, in Fig. 2 (hatching of sections other than the sheet member omitted). In this case, a UV ray source 3a (e.g. a black light lamp) is so arranged at the inner side of an eaves as to ensure substantially uniform UV irradiation over the entire surface of the sheet member 20. In this condition, when UV ray is irradiated in the night, the entire outer walls emit light clearly. In this case, if intended patterns or figures of an inorganic fluorescent material are formed in the luminescent layer 1b of the sheet member 20, the patterns or figures can be clearly shown as desired.

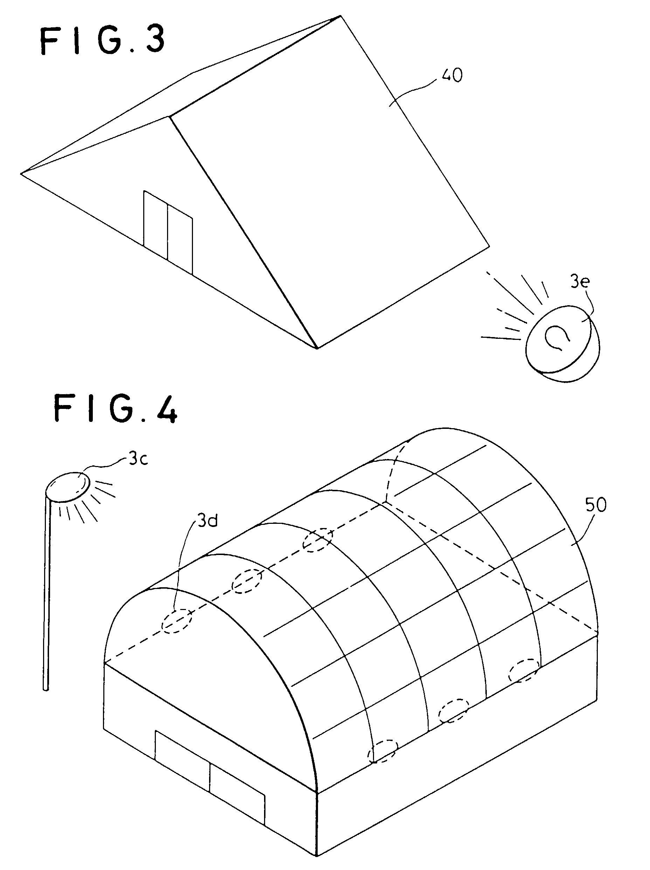

The sheet member of Fig. lb may be used as outdoor goods such as tents as shown in Fig. 3. If a sheet member 40 is irradiated with black light 3c in the night during camping, the tent emits luminescence, enabling one to more excite the camping life.

As shown in Fig. 4, the sheet member of Fig. lb can be used to make a roof of a construction utilized, for example, as some event facilities. If a sheet member 50 is irradiated with outdoor and indoor black light lamps 3c and 3d, the roof of the construction emits clear luminescence. When the luminous sheet member of the invention is applied to outdoor goods such as tents, and rooves and outer walls of buildings it is preferred to use, as a matrix, a fluorine resin which has very excellent water repellency and weatherability. Of course, the sheet members other than that shown in Fig. 1b may also be applied to those fields shown in Figs. 3 (tent) and 4 (roof).

The glass sheet member of Fig. lc may be applied as a glass door or a window glass as shown in Fig. 2. In this case, when a UV ray source 3b is placed at the indoor side to irradiate the sheet member (glass door) 30 with UV ray, the glass door can emit light when desired. The luminescent layer 1c of the sheet member 30 may be entirely formulated with an inorganic fluorescent material to cause luminescence to emit from the entire glass door. Alternatively, the inorganic fluorescent material may be formulated partly or in a pattern, luminescence is emitted from the lower portion of the glass door or in the form of the pattern.

Next, further Example 5 will be described, which relates to luminous member shaped in the form of desired three-dimensional configurations (hereinafter referred to as luminescent moldings).

### =Example 5=

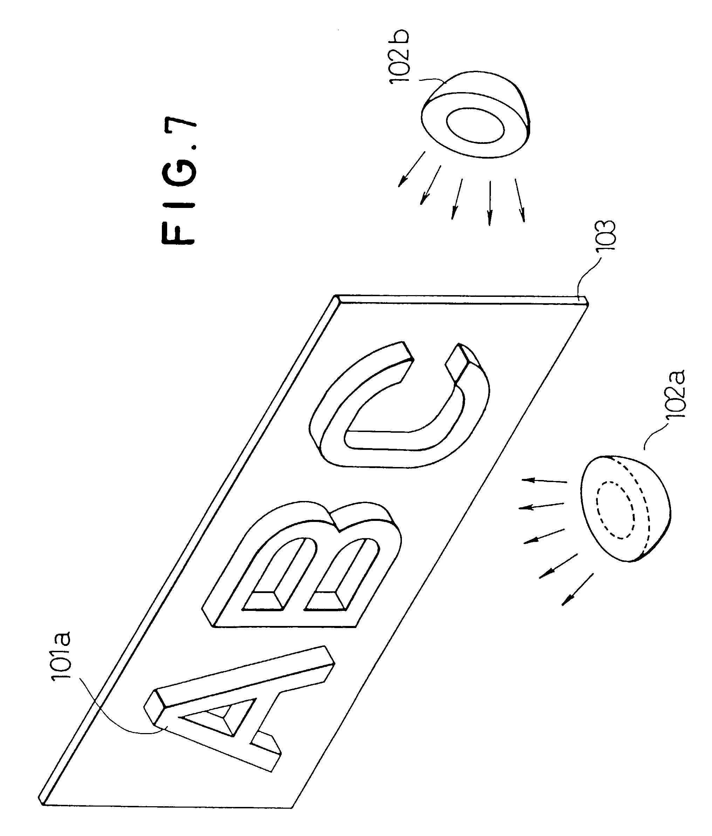

Fig. 7 shows an example wherein the luminescent moldings are utilized as signboards at storefront or advertizing boards. A luminescent molding 101a in this embodiment is a desired figure-shaped molding which is capable of entirely emitting luminescence. This type of luminescent molding 101a is fabricated, for example, by formulating an inorganic fluorescent material in a thermoplastic resin matrix, melting the resin and processing by a known method such as an injection molding. The inorganic fluorescent material is not impeded with respect to luminescent characteristics when exposed to the melting temperature of the resin. If the resin used is a flame-resisting or incombustible, high heat-resistant resin, good safety is ensured on at the fire occurrence.

Where the luminescent molding 101a of Fig. 7 is fabricated using a glass matrix, an inorganic fluorescent material is formulated in a glass starting material, followed by melting such as in an electric furnace and casting the resulting melt into a mold made, for example, of graphite and cooling. If it is desired to effect the molding process at temperatures lower than the melting temperature of the glass depending on the type of inorganic fluorescent material, the molding may be obtained by a method such as a solating-gelating method. However, in the application for the luminous member according to the invention, inorganic fluorescent materials are not used for lamps and a luminescent portion is sufficient to be visibly observed as tinged, so that it is not necessary to severely control the luminous intensity and color tone, and accordingly, no actual problem is involved when using the melting method.

The thus obtained luminescent molding (figure-shaped) 101a is placed on an appropriate substrate 103 and is irradiated with UV ray, whereupon clear luminescence appears in the form of the figures. As stated hereinabove, since the luminescent molding of the embodiment is obtained by formulating an inorganic fluorescent material- in a matrix and shaping, for example, by an injection molding, the degree of freedom of the shape design is higher than the case where a neon tube is used, an advantage from the standpoint of mass production may be obtained and, when a plurality of inorganic fluorescent materials having different fluorescent colors are properly used, an intricate clear indication can be made. Further, when the substrate 103 is constituted of a UV ray permeable material, UV ray from a UV lamp may be applied from the back side of the substrate in order to cause the molding 101a to emit luminescence.

Although not shown in the drawings, according to the invention, a plurality of inorganic fluorescent materials may be applied to wall surfaces having intricate relieves thereon. When UV ray is irradiated from outside, glittering colors may be brought to the relieves. Moreover, luminescent moldings may be applied as an illuminator. In the case, an ordinary fluorescent lamp and a black light lamp are used in combination and appropriately switched over to enjoy the difference in the luminescence.

Next, examples 6 to 8 dealing with application to tile pieces will be described. In this case, tile materials, glaze compositions and the process for fabricating tile pieces are not limited to those described hereinbelow. The baking temperature after formation of a luminescent layer (luminescent portion) should preferably be set while taking into account the heat resistance of an inorganic fluorescent material used.

### =Example 6=

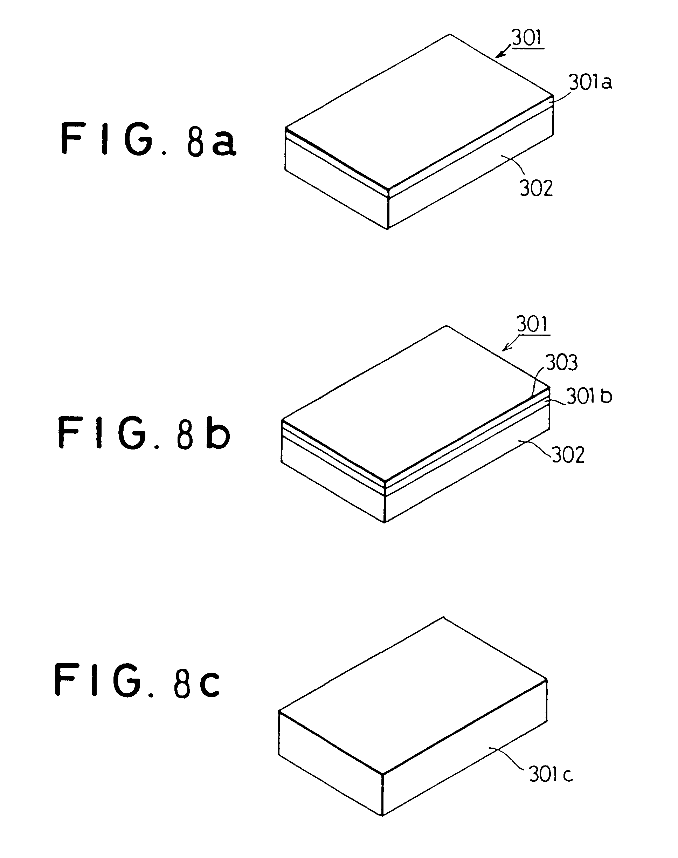

Fig. 8a shows an embodiment wherein a glaze formulated with an inorganic fluorescent material is applied onto the surface of a tile body 302 to form a luminescent layer 301a. The tile body is constituted of the luminescent body of example 9. This tile piece is fabricated in the following process which, for example, includes the steps of:
1. Mixing and kneading raw rock powder finely pulverized by a crusher or ball mill with clay and water;
2. Forming the mixture to a tile body plate with a desired dimension by means of pressure molding or the like;
3. Drying and baking the tile body 302 molded in step 2 without glazing;
4. Preparing a glaze containing an inorganic fluorescent material. The glaze composition is not critical and includes, for example, SiO₂, Al₂O₃, Na₂O, K₂O, CaO, MgO, B₂O₃ and the like; If necessary, a plurality of glazes containing different inorganic fluorescent materials are prepared;
5. Coating a surface of the ungrazed tile body with the glaze prepared in step 4 (luminescent layer 301a) and baking it at a temperature, for example, of approximately 600°C to obtain a tile piece of Fig. 8a. The glaze may be not only applied onto the entire surface of the body, but also used to draw a desired pattern.

### =Example 7=

Fig. 8b shows an embodiment wherein a luminescent layer 301b containing an inorganic fluorescent material is formed on the surface of a tile body 302 and is protected with a glaze. The tile body is constituted of the luminescent body of example 9. This tile piece can be fabricated in the following process which, for example, includes the steps of;
1. Mixing and kneading raw rock powder finely pulverized by a crusher or ball mill with clay and water;
2. Forming the mixture to a tile body plate with a desired dimension by means of pressure molding or the like;
3. Drying and baking the tile body 302 molded in step 2 without glazing.
4. Coating an inorganic fluorescent paint over the surface of the body 302 obtained by the step 3 to form a luminescent layer 301b; Alternatively, as in the case of Example 21, the paint may be not only applied onto the entire surface of the body 302, but also used to draw a desired pattern; and
5. Coating a glaze (glaze layer 303) over the surface of the luminescent layer 301b formed in step 4 and baking it at a temperature, for example, of approximately 600°C to obtain a tile piece as shown in Fig. 8b. In this case, the glaze layer 303 may not be necessarily transparent and may be imparted with the luminescent property.

In Fig. 8b, since the glaze layer 303 is formed on the luminescent layer, it is possible to baking a desired picture pattern drawn on the graze layer 303 by the fluorescent paint according to the present invention.

Still alternatively, the glaze layer 303 of Fig. 12b may be omitted (unglazed tile) and the fluorescent paint alone may be baked on the body 302. In order to prevent moisture or gases from entering into the body 302, however, it is preferred to apply an appropriate glaze over the surface of the body.

### =Example 8=

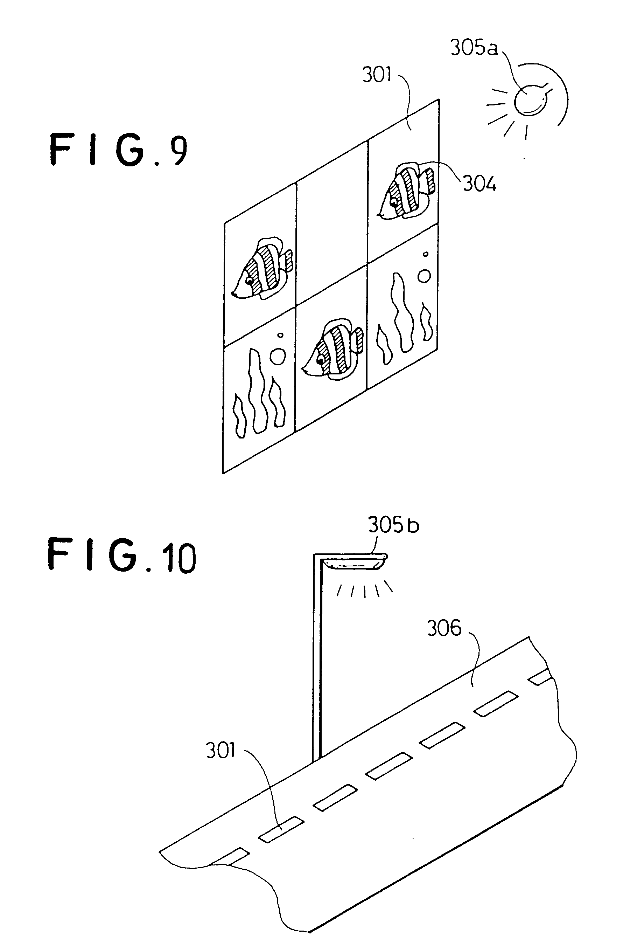

Fig. 9c shows an embodiment wherein the tile body is entirely made of a luminescent layer 301c. This tile piece can be fabricated in the following process which, for example, includes the steps of:
1. Mixing and kneading raw rock powder finely pulverized by a crusher or ball mill with clay, water and an inorganic fluorescent powder;
2. Forming the mixture to a tile body plate with a desired dimension by means of pressure molding or the like;
3. Baking the body formed in step 2 to obtain a tile piece as shown in Fig. 8c. If necessary, a transparent glaze may be applied onto the body surface.

The tile body of Examples 6 and 7 is constituted of the luminescent body of Example 8, on which a plurality of luminescent layers is piled on.

Next, concrete examples for the application of the luminescent tile pieces fabricated in one of the Examples 6 to 8 will be described. These examples are not intended to limit the manner of application of the luminescent tiles thereto.

In Fig. 9, the luminescent tile pieces are utilized as surface covering member for outer walls of buildings or inner walls such as, for example, of toilet room, bath room, kitchen and dining room. When black light from the lamp 305a is applied, a glittering pattern 304 clearly appears. The luminescent tile pieces according to the present invention can be utilized as a functional member for moody illumination in the room depending on the manner of placement.

Fig. 10 shows an example where tile pieces 301 according to the present invention are arranged to form a lane-dividing line on a road 306. When the tile pieces 301 are irradiated with black light from a road lamp 305b in the night, the indication line appears as luminescent and is much more distinguishable than a line formed from ordinary paints. Since the inorganic fluorescent material is high in weatherability against sunlight, stable luminescent characteristics are ensured in outdoor use.

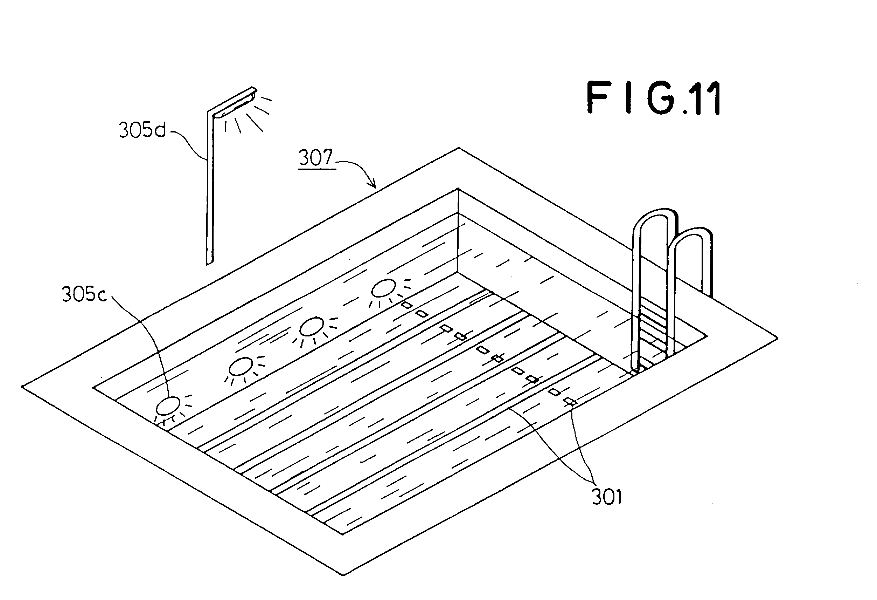

Fig. 11 shows an example wherein lines provided at the bottom of a pool 307 (course separation lines) are formed of luminescent tile pieces. The lines clearly appear if the tile pieces 301 are irradiated with waterproof black light sources 305c placed in appropriate positions in the water (provided at side walls in the figure) or black light sources 305d provided at a swimming pool side. Of course, not only the lines, but also desired patterns may be provided on inner walls or peripheries of the swimming pool. This is especially effective when the swimming pool is employed under low illumination in the night. Besides, although not shown in the figure, tile pieces according to the present invention may be used in an open-air bath.

In the foregoing description, only the tile piece in the form of a plate is taken into account. In the present invention, however, it is also possible to apply the inventive concept to a roofing tile having a curved surface.

Additionally, though the light sources are specialized for illumination of tiles in the above-mentioned examples, it should be noted that, depending on the purpose or the environmental condition, such light sources are not always necessary. This possibility to the light source may also be applied to the cases of the sheet members and moldings set forth hereinbefore.

## Claims

1. A luminous member comprising a luminescent portion formed of a matrix formulated with an inorganic fluorescent material in a predetermined shape, the member being formed as a building roof member or outer wall member, characterized in that the matrix comprises a fluorine resin.

2. A luminous member according to claim 1, wherein said member is entirely formed by said matrix uniformly formulated with the inorganic fluorescent material.

3. A luminous member according to claim 1, wherein said luminescent portion is defined on the surface of the member.

4. A luminous member according to claim 1, wherein said member is in the form of a sheet.

5. A luminous member according to claim 4, wherein said sheet comprises a film formulated with the inorganic fluorescent material.

6. A luminous member according to claim 4, wherein said sheet comprises fibers formulated with the inorganic fluorescent material.

7. A luminous member according to claim 4, wherein said sheet further comprises a reinforcing layer for supporting the luminescent portion.

8. A luminous member according to claim 7, wherein said reinforcing layer comprises a glass fiber layer.

9. A luminous member according to claim 1, wherein said matrix is formulated with a plural kinds of inorganic fluorescent materials.

## Patentansprüche

1. Leuchtelement umfassend einen leuchtenden Teil, der aus einer Matrix gebildet ist, die mit einem anorganischen fluoreszierenden Material in vorbestimmter Form formuliert wurde, wobei das Element als Gebäudedachelement oder Außenwandelement ausgebildet ist, dadurch gekennzeichnet, daß die Matrix ein Fluorharz umfaßt.

2. Leuchtelement gemäß Anspruch 1, wobei das Element zur Gänze aus der Matrix gebildet ist, die gleichförmig mit dem anorganischen fluoreszierenden Material formuliert wurde.

3. Leuchtelement gemäß Anspruch 1, wobei der leuchtende Teil auf der Elementoberfläche definiert ist.

4. Leuchtelement gemäß Anspruch 1, wobei das Element in Folienform vorliegt.

5. Leuchtelement gemäß Anspruch 4, wobei die Folie einen Film umfaßt, der mit dem anorganischen fluoreszierenden Material formuliert wurde.

6. Leuchtelement gemäß Anspruch 4, wobei die Folie Fasern umfaßt, die mit dem anorganischen fluoreszierenden Material formuliert wurden.

7. Leuchtelement gemäß Anspruch 4, wobei die Folie weiter eine Verstärkungsschicht zur Unterstützung des leuchtenden Teils umfaßt.

8. Leuchtelement gemäß Anspruch 7, wobei die Verstärkungsschicht eine Glasfaserschicht umfaßt.

9. Leuchtelement gemäß Anspruch 1, wobei die Matrix mit einer Mehrzahl von Arten anorganischer fluoreszierender Materialien formuliert wurde.

## Revendications

1. Elément lumineux comprenant une partie luminescente formée d'une matrice formulée avec une matière minérale fluorescente selon une forme prédéterminée, l'élément étant fabriqué sous forme d'un élément de toit d'immeuble ou d'un élément de mur extérieur, caractérisé en ce que la matrice comprend une résine fluorée.

2. Elément lumineux selon la revendication 1, dans lequel ledit élément est entièrement constitué par ladite matrice uniformément formulée avec la matière minérale fluorescente.

3. Elément lumineux selon la revendication 1, dans lequel ladite partie luminescente est définie sur la surface de l'élément.

4. Elément lumineux selon la revendication 1, dans lequel ledit élément est sous forme d'une feuille.

5. Elément lumineux selon la revendication 4, dans lequel ladite feuille comprend un film formulé avec la matière fluorescente minérale.

6. Elément lumineux selon la revendication 4, dans lequel ladite feuille comprend des fibres formulées avec la matière minérale fluorescente.

7. Elément lumineux selon la revendication 4, dans lequel ladite feuille comprend en outre une couche de renfort pour soutenir la partie luminescente.

8. Elément lumineux selon la revendication 7, dans lequel ladite couche de renfort comprend une couche de fibres de verre.

9. Elément lumineux selon la revendication 1, dans lequel ladite matrice est formulée avec plusieurs types de matières minérales fluorescentes.
